# EUROPEAN PATENT APPLICATION

(11) **EP 4 571 432 A1**
(43) Date of publication of application: **18.06.2025**
(21) Application number: 23216587.8
(22) Date of filing: 14.12.2023
(51) Int. Cl.: G05B 13/02, B65H 59/00, G06N 3/00

(54) **COMPUTER-IMPLEMENTED DEVICE, COMPUTER-IMPLEMENTED METHOD, AND COMPUTER PROGRAM PRODUCT FOR CONTROLLING A WINDING MACHINE, AND WINDING MACHINE**

(71) Applicant: Siemens Aktiengesellschaft, 80333 München (DE)
(72) Inventor: Bischoff, Martin, 85653 Aying, Großhelfendorf (DE); Körwer, Niklas, 51065 Köln (DE); Menzel, Thomas, 91094 Langensendelbach OT Bräuningshof (DE)
(74) Representative: Siemens Patent Attorneys

(57) **Abstract**

A computer-implemented device (100) for controlling a winding machine (200) for winding a winding material (M) onto a target device (T5), the winding machine (200) including a storage device (210) for storing the winding material (M) and a buffer system (220) for buffering the winding material (M) between the storage device (210) and the target device (T5), the computer-implemented device (100) comprising:
a receiving unit (110) for receiving a number N of status signals (S1-S11), each of the N status signals (S1-S11) including a certain indication for a current process status of a material flow of the winding material (M),
a calculating unit (120) using at least one neural network (121), said at least one neural network (121) being configured to provide a number of output signals (O1, O2) for controlling the storage device (210) and/or the buffer system (220) using the received N status signals (S1-S11) as input, and
a controlling unit (130) for controlling the storage device (210) and/or the buffer system (220) using the provided output signals (01, 02).

Using the at least one neural network for controlling the winding machine can produce a smoother control. This improves the energy efficiency of the winding machine and reduces the amount of stress on the mechanical parts of the winding machine and the winding material.

## Description

The present invention relates to a computer-implemented device for controlling a winding machine for winding a winding material onto a target device, the winding machine including a storage device for storing the winding material and a buffer system for buffering the winding material between the storage device and the target device. Moreover, the present invention relates to a system comprising a winding machine for winding a winding material onto a target device and a computer-implemented device for controlling the winding machine. Further, the present invention relates to a computer-implemented method and to a computer program product for controlling a winding machine for winding a winding material onto a target device.

For example, in winding/unwinding applications, material stored on a roll, the winding material, is wound/unwound to a target device and fed into/consumed from a discontinuous process. Examples for the winding material include plastic films, thin sheet metal, packaging labels, paper, battery separator films and the like.

To avoid having to accelerate and deaccelerate the entire material roll for every process step, a dancer arrangement of smaller rollers is used over which the winding material is run. Some rolls of this dancer arrangement are free to move which allows the coupling of a continuous rolling/unrolling of the winding material with the discontinuous process. If the dancer arrangement has a motor attached to some of the rollers, it is referred to as an active dancer arrangement. If the rollers are attached to e.g. a spring to provide tension, it is called a passive dancer arrangement. The amount of winding material that can be fed into the dancer arrangement is limited so some form of control is necessary for the film reel to account for sudden changes in the process speed or that of previous processes and for quickly stopping and restarting of the winding machine. Without any additional control, the tension of the material could either be too low which leads to problems in the process or be increased to a point where the material is deformed or destroyed. In both cases, the winding machine must be halted, and the material must be corrected by an operator. In many cases, this control is further complicated by the fact, that the diameter of the material on the roll is unknown or measured with a large uncertainty, e.g. through an ultrasound sensor.

There are several conventional solutions using general control theory and motion control techniques to solve this problem. One example for a wide selection of applications is SINAMICS DCC (available under: https://support.industry.siemens.com/cs/document/38043750/) . This document contains solutions for basic unwinding and winding applications but also includes a section dedicated to unwinding with a dancer arrangement. Like many other applications from other vendors, a series of PID controllers is used to control the amount of material that is unwound. Tuning these PID controllers requires a deep knowledge of control theory and the machine parameters. For many customers, this knowledge is concentrated in one machine operator that tunes these parameters by feel rather than rules and by trial and error. Uncertainties in the diameter complicate the search for optimized parameters. These conventional solutions are also limited to only directly controlling the unwinding with respect to the dancer position. Other process values like the machine speed of a previous machine or the material inflow can usually not be regarded.

Thus, it is one object of the present invention to enhance the control of a winding machine.

According to a first aspect, a computer-implemented device for controlling a winding machine for winding a winding material onto a target device is proposed, the winding machine including a storage device for storing the winding material and a buffer system for buffering the winding material between the storage device and the target device. The computer-implemented device comprises:
a receiving unit for receiving a number N of status signals, each of the N status signals including a certain indication for a current process status of a material flow of the winding material, with N≥1,
a calculating unit using at least one neural network, said at least one neural network being configured to provide a number of output signals for controlling the storage device and/or the buffer system using the received N status signals as input, and
a controlling unit for controlling the storage device and/or the buffer system using the provided output signals.

The present computer-implemented device using at least one neural network can produce a smoother control that is not relying on simply starting or stopping the storage device and/or the buffer system. This improves the energy efficiency of the winding machine and reduces the amount of stress on the mechanical parts of the winding machine. Further, it reduces the amount of stress on the winding material because starting and stopping may have the highest values on acceleration which brings the highest amounts of stress for the winding material, what is prevented here.

The present neural network used by the calculating unit embodies an algorithm for an AI (artificial intelligence) policy of the computer-implemented device that can be set up to also include various machine states or signals from previous/following winding machines. This enables the neural network and therefore the calculating unit to have more control in cases of fast changing conditions where the process speed is changing quickly.

The at least one neural network of the calculating unit is, when operating the winding machine, a trained neural network. In order to facilitate training, it may be beneficial to transform the input signals, i.e., the received status signals, to encode additional information or to limit negative effects of the signals, like discontinuities. For example, for the estimated amount of winding material in the buffer system, it may be helpful to only pass the maximum or minimum value of the last machine cycles instead of the oscillating current value or apply a suitable filter for the signals. Furthermore, binary signals may be encoded as sawtooth functions, for example.

Presently, the term "winding" refers to winding applications and to unwinding applications. The neural network may be also referred to as artificial neural network.

According to an embodiment, the receiving unit is configured to receive a plurality of N status signals including:
- a current reel velocity of a roll of the storage device, said roll storing the winding material,
- a current speed of a motor of the storage device,
- a current speed of a motor of the buffer system,
- a current amount of the winding material stored on the roll of the storage device,
- a current amount of the winding material being buffered in the buffer system,
- a number of light bridge signals of light bridges arranged at an infeed belt for providing incoming target devices,
- a number of position signals of light bridges arranged at an infeed belt for providing incoming target devices,
- a current speed of the infeed belt,
- a number of light bridge signals of light bridges arranged at an outfeed belt for delivering outgoing target devices, and/or
- a current speed of the outfeed belt.
- a process signal indicating a current status of the process progress.

In embodiments, additional further status signals may be used which are configured to describe the current status of the system including the winding machine, the buffer system and the storage device. In applications, also subgroups of said status signals may be used.

According to a further embodiment, the output signals provided by the neural network include first setpoints for a first motor controller for the motor of the storage device and/or second setpoints for a second motor controller for the motor of the buffer system.

In applications, the system including the winding machine may have a plurality of different motors with different functions. In embodiments, for each of said motors of the winding machine, the neural network of the calculating unit may provide suitable output signals if it is trained accordingly.

According to a further embodiment, the neural network is configured to use reinforcement learning and to receive as additional inputs rewards for a smooth movement of the winding material, penalties for movements of the winding material having an acceleration being higher than the upper threshold, and/or penalties for border violations. In particular, the smooth movement is defined by an upper threshold for an acceleration of the winding material in the winding machine.

Using the reinforcement learning, the present at least one neural network may be trained. The reinforcement learning may use rewards and penalties to optimize the functionality of the computer-implemented device when controlling the winding machine. In particular, if the movement of the winding material, executed by the winding machine, has an acceleration under said upper threshold, said movement is a smooth movement. In the other case, if the movement of the winding material in the winding machine 200 has an acceleration equal to or greater than said upper threshold for acceleration, the movement is no smooth movement and the neural network may receive a penalty for violating said upper threshold. Further, for reinforcement learning, the neural network may receive penalties for actions that violate any predefined boundaries.

According to a further embodiment, the computer-implemented device is configured to control the winding machine in a discontinuous process according to a discontinuous wrapping process in which the winding machine wraps a plurality of target devices using the winding material. The discontinuous process of the computer-implemented device may correspond to said discontinuous wrapping process of the winding machine.

According to a further embodiment, the neural network is trained using a Proximal Policy Optimization (PPO) algorithm. In the PPO algorithm, a first neural network and a second neural network may be trained, wherein the first neural network is configured to provide actions fed into the winding machine and the second neural network is trained to estimate quality of these actions, in other words how good these actions are.

In particular, the PPO algorithm is run on a simulation of the winding machine. Thus, the PPO algorithm is not run on the winding machine directly, but instead on a simulation of said winding machine. This is beneficial as reinforcement learning algorithms start off with random actions that can cause damages or problems in the winding machine. By using a simulation, the simulation can simply be reset after a series of destructive actions and a negative reward is returned to the algorithm so that the algorithm can learn from the mistakes.

According to a further embodiment, the PPO algorithm is run on a simulation of the winding machine.

According to a further embodiment, the at least one neural network of the calculating unit has a Multi-Layer-Perception (MLP) structure.

According to a further embodiment, the at least one neural network is a Long-Short-Term-Memory (LSTM) neural network.

According to a further embodiment, the at least one neural network is a Recurrent Neural Network (RNN).

In embodiments, the at least one neural network may be trained with a new policy. This can be done very quickly while adaptions to the conventional approach often require a very deep understanding of control theory and the application at hand. This makes it difficult to adapt the existing solutions to new dancer arrangements, e. g., five rolls instead of three rolls, different locations of the rolls or coupling some of the rolls in the dancer arrangement to each other, for example. With the AI based approach using the at least one neural network, these parameters can easily be adjusted, and the policy can be retrained in only a few days. This can be achieved through cloud computing with an easy-to-use interface for the machine engineer.

The algorithm, embodied by the at least one neural network, may also be used for design optimizations by running different trainings with changing machine configurations, e.g. the number of rolls in buffer, the size of the material roll, the maximum acceleration and deacceleration of the reel, the number and the quality of the sensors.

The respective unit, e.g., the calculating unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

Here and in the following, a neural network or artificial neural network can be understood as software code that is stored on a computer-readable storage medium and represents one or more networked artificial neurons or can simulate their function. The software code can also contain several software code components, which can, for example, have different functions. In particular, an artificial neural network can implement a non-linear model or a non-linear algorithm that maps an input, here the status signals, to an output, here the output signals. The input may be given by an input feature vector, or an input sequence and the output can contain, for example, an output category for a classification task, one or more determined values, e. g. setpoints for motor controllers or a predicted sequence.

Any embodiment of the first aspect may be combined with any embodiment of the first aspect to obtain another embodiment of the first aspect.

According to a second aspect, a system is proposed, the system comprising a winding machine for winding a winding material onto a target device, the winding machine including a storage device for storing the winding material and a buffer system for buffering the winding material between the storage device and the target device, and a computer-implemented device for controlling the winding machine of the first aspect or of any embodiment of the first aspect.

In embodiments, the buffer system is embodied as a dancer arrangement including a plurality of dancer rollers.

In embodiments, at least one of the pluralities of dancer rollers is an active dancer roller being driven by a dancer motor.

According to a third aspect, a computer-implemented method for controlling a winding machine for winding a winding material onto a target device is proposed, the winding machine including a storage device for storing the winding material and a buffer system for buffering the winding material between the storage device and the target device. The computer-implemented method comprises:
receiving a number N of status signals, each of the N status signals including a certain indication for a current process status of a material flow of the winding material, with N≥1,
feeding the received N status signals into at least one neural network for providing a number of output signals to control the storage device and/or the buffer system, and
controlling the storage device and/or the buffer system using the provided output signals.

In particular, a computer-implemented method is a method which utilizes a computer, a computer network, or another programmable device, wherein one or multiple features are wholly or partially realized by means of a computer program.

The technical effects and advantages described for the computer-implemented device according to the first aspect apply equally to the computer-implemented method according to the third aspect.

According to a fourth aspect, a computer program product comprising a program code for executing the computer-implemented method according to the third aspect when run on at least one computer is proposed.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of an embodiment of a computer-implemented device for controlling a winding machine;
- Fig. 2: shows a schematic block diagram of an embodiment of a system including a winding machine and a computer-implemented device for controlling the winding machine; and
- Fig. 3: shows a schematic flow chart of an embodiment of a computer-implemented method for controlling a winding machine.

In the Figures, like reference numerals designate like or functionally equivalent elements, unless otherwise indicated.

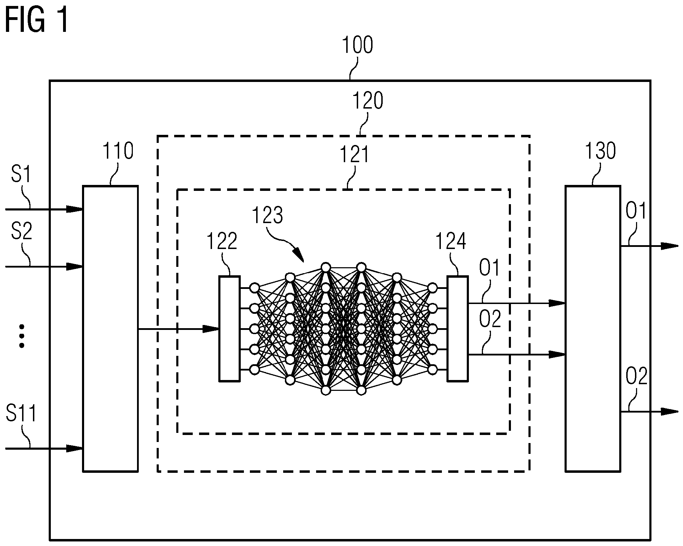

In Fig. 1, a schematic block diagram of an embodiment of a computer-implemented device 100 for controlling a winding machine 200.

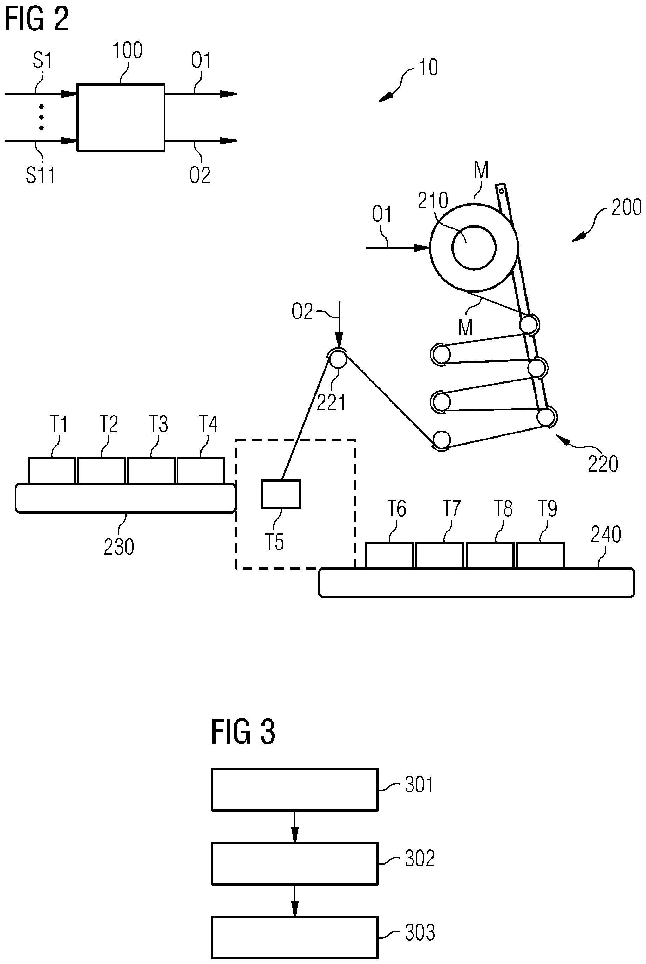

The computer-implemented device 100 of Fig. 1 is discussed with reference to Fig. 2, Fig. 2 showing a schematic block diagram of an embodiment of a system 10 including a winding machine 200 and the computer-implemented device 100 of Fig. 1. It may be noted that Fig. 1 shows details of the computer-implemented device 100, wherein Fig. 2 shows the same computer-implemented device 100 in an abstracted manner to ensure readability of Fig. 2.

The system 10 of Fig. 2 includes a winding machine 200 for winding a winding material M onto a target device T5. As depicted in Fig. 2, the system 10 includes an infeed belt 230 for providing incoming target devices T1-T4 and an outfeed belt 240 for delivering output target devices T6-T9. As shown in Fig. 2, there are nine target devices T1-T9, wherein the target device T5 is under processing by the winding machine 200, the target devices T1-T4 are incoming target devices provided by the infeed belt 230 and the target devices T6-T9 are already processed by the winding machine 200 and therefore said target devices T6-T9 are on the outfeed belt 240.

The winding machine 200 includes a storage device 210 for storing the winding material M and a buffer system 220 for buffering the winding material M between the storage device 210 and the target device T5 under processing. The storage device 210 includes a roll storing said winding material M. For example, the winding material M is a plastic film, a thin sheet metal, a paper, or a battery separator film. The winding machine 200 wraps the winding material M onto said target devices T1-T9 provided by the infeed belt 230 in a discontinuous process. The buffer system 220 is configured to buffer the winding material M between said storage device 210 and the target device T5 under processing.

For example, the buffer system 220 is embodied as a dancer arrangement including a plurality of dancer rollers. In the example of Fig. 2, the dancer arrangement 220 includes seven dancer rollers. For sake of readability, only one of the dancer rollers is provided with the reference sign 221 in Fig. 2. Moreover, at least one of the pluralities of dancer rollers of the dancer arrangement 220 may be embodied as an active dancer roller being driven by a dancer motor. For example, the dancer roller with the reference sign 221 is an active dancer roller being driven by a dancer motor and may be controlled by a motor controller.

Coming back to the computer-implemented device 100 configured to control the winding machine 200 as shown in Fig. 2 and in Fig. 1 in detail. As Fig. 1 highlights, the computer-implemented device 100 includes a receiving unit 110, a calculating unit 120 and a controlling unit 130. The receiving unit 110 is configured to receive a number N of status signals S1-S11. In the embodiment of Figs 1 and 2, the receiving unit 110 receives eleven status signals S1-S11 without loss of generality. In general, N is equal to or greater than 1 (N≥1). Each of the N status signals S1-S11 includes a certain indication or information for the current process status of the material flow of the winding material M in the winding machine 200.

For example, the plurality of N status signals S1-S11 include
- a current reel velocity S1 of a roll of the storage device 210, said roll storing the winding material M,
- a current speed S2 of a motor of the storage device 210,
- a current speed S3 of a motor of the buffer system 220,
- a current amount S4 of the winding material M stored on the roll of the storage device 210,
- a current amount S5 of the winding material M being buffered in the buffer system 220,
- a number of light bridge signals S6 of light bridges arranged at an infeed belt 230 for providing incoming target devices T1-T4,
- a number of position signals S7 of light bridges arranged at the infeed belt 230 for providing the incoming target devices T1-T4,
- a current speed S8 of the infeed belt 230,
- a number of light bridge signals S9 of light bridges arranged at an outfeed belt 240 for delivering outgoing target devices T6-T9,
- a current speed S10 of the outfeed belt, and/or
- a process signal S11 indicating a current status of the process progress.

The calculating unit 120 uses at least one neural network 121. Without loss of generality, the calculating unit 120 of Fig. 1 uses one neural network 121. For example, the neural network 121 of the calculating unit 120 has a multi-layer-perception (MLP) structure. In embodiments, the neural network 121 may be embodied as a Long-Short-Term-Memory (LSTM) neural network or as a Recurrent Neural Network (RNN).

The neural network 121 is configured to provide a number of output signals O1, O2 for controlling the storage device 210 and/or the buffer system 220 using the received N status signals S1-S11 as input.

As illustrated in Fig. 1, the neural network 121 includes an input layer 122, a plurality of hidden layers 123 and an output layer 124. The input layer 122 of the neural network 121 receives the provided status signals S1-S11 from the receiving unit 110, processes these input status signals S1-S11 by means of the plurality of hidden layers 123 and provides the output signals O1, O2 to the controlling unit 130 via its output layer 124.

The controlling unit 130 is configured to control the storage device 210 and/or the buffer system 220 using the provided output signals O1, O2.

In embodiments, the output signals O1, O2 as provided by the neural network 121 are adapted to control both the storage device 210 and the buffer system 220. In particular for the above discussed case that the buffer system 220 is embodied as a dancer arrangement including at least one active dancer roller, the neural network 121 may provide output signals O1, O2 for controlling both the storage device 210 and the dancer arrangement.

For example, the output signals O1, O2 provided by the neural network 121 include first setpoints O1 for a first motor controller for at least one motor of the storage device 210 and second setpoints O2 for a second motor controller for at least one motor of the buffer system 220. In the example of Fig. 2, the output signal O1 is adapted to control the first motor controller for the at least one motor of the storage device 210 and the output signal O2 is adapted to control the second motor controller for the at least one dancer motor of the dancer roller 221.

Moreover, in embodiments, the neural network 121 is configured to use reinforcement learning. In this case, the neural network 121 is adapted to receive as additional inputs rewards for a smooth movement of the winding material M, the smooth movement being defined by an upper threshold for an acceleration of the winding material M in the winding machine 200. In other words, if the movement of the winding material M, executed by the winding machine 200, has an acceleration under said upper threshold, said movement is a smooth movement. In the other case, if the movement of the winding material M in the winding machine 200 has an acceleration equal to or greater than said upper threshold for acceleration, the movement is no smooth movement and the neural network 121 may receive a penalty for violating said upper threshold. Furthermore, for reinforcement learning, the neural network 121 may receive penalties for actions that violate any predefined boundaries.

As discussed above, the winding machine 200 particularly wraps said plurality of target devices T1-T9 with the winding material M in a discontinuous wrapping process. In this regard, the computer-implemented device 100 is particularly configured to control the winding machine 200 in a discontinuous process, too. The discontinuous process of the computer-implemented device 100 may correspond to said discontinuous wrapping process of the winding machine 200.

Before operation, the neural network 121 is trained. For training, a Proximal Policy Optimization (PPO) algorithm may be used. In the PPO algorithm, a first neural network and a second neural network may be trained, the first neural network being configured to provide actions fed into the winding machine 200 and the second neural network may be trained to estimate the quality of these actions, in other words how good these actions are.

In particular, the PPO algorithm is run on a simulation of the winding machine 200. In other words, the PPO algorithm is not run on the winding machine 200 directly, but instead on a simulation of said winding machine 200. This is beneficial as reinforcement learning algorithms start off with random actions that can cause damages or problems in the winding machine 200. By using a simulation, the simulation can simply be reset after a series of destructive actions and a negative reward is returned to the algorithm so that the algorithm can learn from the mistakes.

Furthermore, Fig. 3 shows a schematic flow chart of an embodiment of a computer-implemented method for controlling a winding machine 200. An example for such a winding machine 200 is depicted in Fig. 2. The winding machine 200 is configured for winding a winding material M onto a target device T5, said winding machine 200 includes a storage device 210 for storing the winding material M and a buffer system 220 for buffering the winding material M between the storage device 210 and the target device T5.

The computer-implemented method of Fig. 3 includes method steps 301-303:
In step 301, a number of status signals S1-S11 is received. Each of the N status signals S1-S11 includes a certain indication for the current process status of the material flow of the winding material M.
In step 302, the received N status signal S1-S11 are fed into at least one neural network 121 for providing a number of output signals O1, O2 to control the storage device 210 and/or the buffer system 220.
In step 303, the storage device 210 and/or the buffer system 220 is controlled using the provided output signals O1, O2. It may be noted that the computer-implemented device 100 of Fig. 1 and Fig. 2 may be adapted to execute above method steps 301-303.

Although the present invention has been described in accordance with preferred embodiments, it is obvious for the person skilled in the art that modifications are possible in all embodiments.

Independent of the grammatical term usage, individuals with male, female or other gender identities are included within the term.

### Reference Numerals:

- 10: system
- 100: computer-implemented device
- 110: receiving unit
- 120: calculating unit
- 121: neural network
- 122: input layer
- 123: hidden layer
- 124: output layer
- 130: controlling unit
- 200: winding machine
- 210: storage device
- 220: buffer system
- 221: dancer roller
- 230: infeed belt
- 240: outfeed belt
- 301-303: method steps
- M: winding material
- 01-02: output signal
- S1-S11: status signal
- T1-T9: target device

## Claims

1. A computer-implemented device (100) for controlling a winding machine (200) for winding a winding material (M) onto a target device (T5), the winding machine (200) including a storage device (210) for storing the winding material (M) and a buffer system (220) for buffering the winding material (M) between the storage device (210) and the target device (T5), the computer-implemented device (100) comprising:
a receiving unit (110) for receiving a number N of status signals (S1-S11), each of the N status signals (S1-S11) including a certain indication for a current process status of a material flow of the winding material (M),
a calculating unit (120) using at least one neural network (121), said at least one neural network (121) being configured to provide a number of output signals (O1, O2) for controlling the storage device (210) and/or the buffer system (220) using the received N status signals (S1-S11) as input, and
a controlling unit (130) for controlling the storage device (210) and/or the buffer system (220) using the provided output signals (01, 02).

2. The device of claim 1,
wherein the receiving unit (110) is configured to receive a plurality of N status signals (S1-S11) including:
- a current reel velocity (S1) of a roll of the storage device (210), said roll storing the winding material (M),
- a current speed (S2) of a motor of the storage device (210),
- a current speed (S3) of a motor of the buffer system (220),
- a current amount (S4) of the winding material (M) stored on the roll of the storage device (210),
- a current amount (S5) of the winding material (M) being buffered in the buffer system (220),
- a number of light bridge signals (S6) of light bridges arranged at an infeed belt (230) for providing incoming target devices (T1-T4),
- a number of position signals (S7) of light bridges arranged at the infeed belt (230) for providing the incoming target devices (T1-T4),
- a current speed (S8) of the infeed belt (230),
- a number of light bridge signals (S9) of light bridges arranged at an outfeed belt (240) for delivering outgoing target devices (T6-T9),
- a current speed (S10) of the outfeed belt (240), and/or
- a process signal (S11) indicating a current status of the process progress.

3. The device of claim 1 or 2,
wherein the output signals (01, 02) provided by the neural network (121) include first setpoints (01) for a first motor controller for the motor of the storage device (210) and/or second setpoints (02) for a second motor controller for the motor of the buffer system (220).

4. The device of one of claims 1 to 3,
wherein the neural network (121) is configured to use reinforcement learning and to receive as additional inputs rewards for a smooth movement of the winding material (M), the smooth movement being defined by an upper threshold for an acceleration of the winding material (M) in the winding machine (200), penalties for movements of the winding material (M) having an acceleration being higher than the upper threshold, and/or penalties for boundary violations.

5. The device of one of claims 1 to 4,
wherein the computer-implemented device (100) is configured to control the winding machine (200) in a discontinuous process according to a discontinuous wrapping process in which the winding machine (200) wraps a plurality of target devices (T1-T9) using the winding material (M).

6. The device of one of claims 1 to 5,
wherein the neural network (121) is trained using a Proximal Policy Optimization, PPO, algorithm, wherein in the PPO algorithm, a first neural network and a second neural network are trained, wherein the first neural network is configured to provide actions fed into the winding machine (200) and the second neural network is trained to estimate quality of these actions.

7. The device of claim 6,
wherein the PPO algorithm is run on a simulation of the winding machine (200).

8. The device of one of claims 1 to 7,
wherein the at least one neural network (121) of the calculating unit (120) has a Multi-Layer-Perception, MLP, structure or is a Long-Short-Term-Memory, LSTM, neural network or a Recurrent Neural Network, RNN.

9. A system (10) comprising a winding machine (200) for winding a winding material (M) onto a target device (T5), the winding machine (200) including a storage device (210) for storing the winding material (M) and a buffer system (220) for buffering the winding material (M) between the storage device (210) and the target device (T5), and a computer-implemented device (100) for controlling the winding machine (200) according to one of claims 1 to 8.

10. The system of claim 9,
wherein the buffer system (220) is embodied as a dancer arrangement including a plurality of dancer rollers (221).

11. The system of claim 10,
wherein at least one of the pluralities of dancer rollers (221) is an active dancer roller being driven by a dancer motor.

12. A computer-implemented method for controlling a winding machine (220) for winding a winding material (M) onto a target device (T5), the winding machine (200) including a storage device (210) for storing the winding material (M) and a buffer system (220) for buffering the winding material (M) between the storage device (210) and the target device (T5), the computer-implemented method comprising:
receiving (301) a number N of status signals (S1-S11), each of the N status signals (S1-S11) including a certain indication for a current process status of a material flow of the winding material (M),
feeding (302) the received N status signals (S1-S11) into at least one neural network (121) for providing a number of output signals (O1, O2) to control the storage device (210) and/or the buffer system (220), and
controlling (303) the storage device (210) and/or the buffer system (220) using the provided output signals (O1, O2) .

13. A computer program product comprising a program code for executing the computer-implemented method according to claim 12 when run on at least one computer.
